# EUROPEAN PATENT APPLICATION

(11) **EP 0 611 264 A1**
(43) Date of publication of application: **17.08.1994**
(21) Application number: 94830044.7
(22) Date of filing: 08.02.1994
(51) Int. Cl.: A01C 17/00

(54) **Spreading disc for centrifugal-type fertilizer spreading machines and fertilizer spreading machine using this disc**

(30) Priority: 11.02.1993 IT TO930083
(71) Applicant: O.M.A.B. S.p.A., 12012 Boves (Cuneo) (IT)
(72) Inventor: Pellegrino, Michele, I-12012 Boves (Cuneo) (IT)
(74) Representative: Notaro, Giancarlo

(57) **Abstract**

A spreading disc (1) of a fertiliser spreading machine of centrifugal-type includes a supporting plate (2) and a plurality of spreading blades (3) each having a channel configuration, with a bottom wall (4) formed by two adjacent portions (4a, 4b) defining an angle therebetween.

## Description

The present invention relates to fertiliser spreading machines of the known type comprising a supporting frame provided with means for attachment thereof to a tractor, at least a spreading disc which is rotatably mounted on the supporting frame around a vertical axis and provided with a plurality of spreading blades, a power transmission for rotating the spreading disc carried by the frame and having a connecting end for coupling to a tractor power outlet, and a fertiliser feeding hopper located over the spreading disc.

The present invention is particularly related to a spreading disc of the known type comprising a supporting plate and a plurality of spreading blades fixed to the supporting plate and having a channel shape.

The object of the present invention is to provide a centrifugal type fertiliser spreading machine which is able to provide the best possible spreading of the fertiliser both with regard to the size of the spreading area, and with regard to the shape thereof.

In order to achieve this object, the invention provides a spreading disc of the above indicated type, characterised in that the bottom wall of each channel-shaped spreading blade has, at least throughout a portion of its longitudinal extension, two longitudinal portions arranged side by side and defining an angle therebetween.

Due to this feature, the product which is canalised within the two adjacent portions of the bottom wall of each blade is projected outwardly along two different directions, so as to provide the best possible spreading of the fertiliser.

In a preferred embodiment, said two portions of the bottom wall of each blade which are inclined to each other have a different length, the shorter portion being inclined in a direction opposite to that of rotation of the spreading disc. Due to this feature, the product which is guided within the shorter portion is projected by centrifugal effect at a different speed, and not only along a different direction, with respect to the product which is guided within the longer channel-shaped portion.

Tests conducted by the applicant have shown that the spreading disc according to the invention dramatically improves the spreading characteristics of the machine.

The invention also provides a fertiliser spreading machine including a spreading disc of the above indicated type.

Further features and advantages of the invention will become apparent from the description which follows with reference to the annexed drawings, given purely by way of non limiting example, in which:
figure 1 is a plan view of a spreading disc according to the present invention,
figures 2, 3 are two perspective views of a spreading blade of the disc according to the invention,
figures 4, 5 are a side view and a front view of the blade, respectively, and
figures 6, 7 show two possible variants.

With reference to the drawings, numeral 1 generally designates a spreading disc for a fertiliser spreading machine of centrifugal-type. The fertiliser spreading machine is not shown in the annexed drawings since it can be of any known type including a frame provided with means for attachment thereof to a tractor, a spreading disc rotatably mounted on the frame which is to be driven in rotation by a power transmission connected to the power outlet of the tractor and a hopper mounted on the frame for feeding the product over the spreading disc.

Fertiliser spreading machines of this type have been manufactured and marketed for a long time by the applicant.

The spreading disc 1 includes a sheet metal plate 2 (which may be slightly conical, according to what is provided in the previous Italian patent application No. TO92A000891 filed on November 3, 1992 by the same applicant) and four spreading blades welded to plate 2 and arranged substantially along four tangential directions with respect to a circumference concentric to disc 1, but having a lower diameter (about 80-90 mm).

Although the particular embodiment shown in the drawings is provided with four blades, it is naturally possible that the number of blades is different. Furthermore, again in the case of the illustrated example, the four blades are provided at positions which are equiangularly spaced from each other and have alternatively two different lengths. Also this feature, however, is not essential to the end of achieving the basic purpose of the present invention.

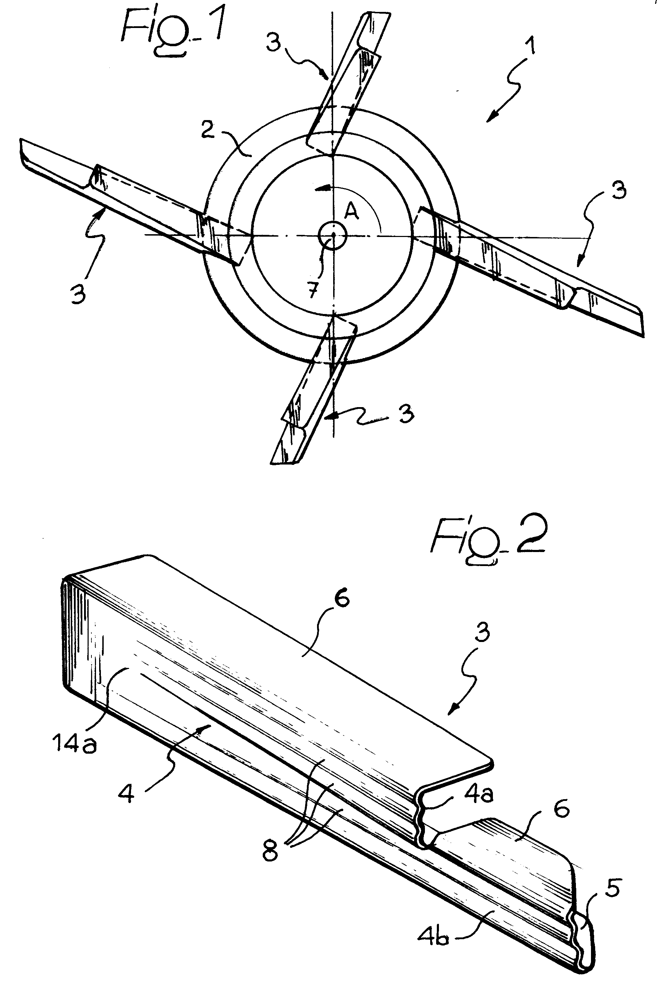

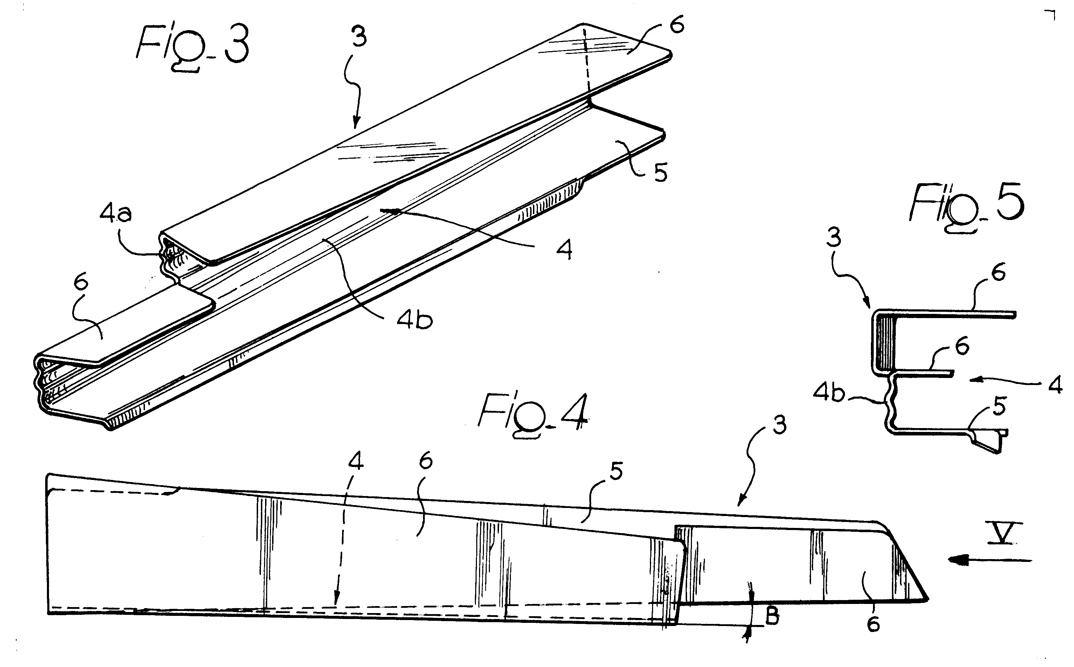

Each blade has a channel shape with a bottom wall 4 which is orthogonal to the plane of plate 2. In the condition of use, the spreading disc 1 is rotatable in the direction of arrow A of figure 1 around a vertical axis 7, so that the bottom wall 4 of each blade is arranged vertically. Each blade also has a lower wing 5 and an upper wing 6 which along with the bottom wall 4 provide the channel configuration.

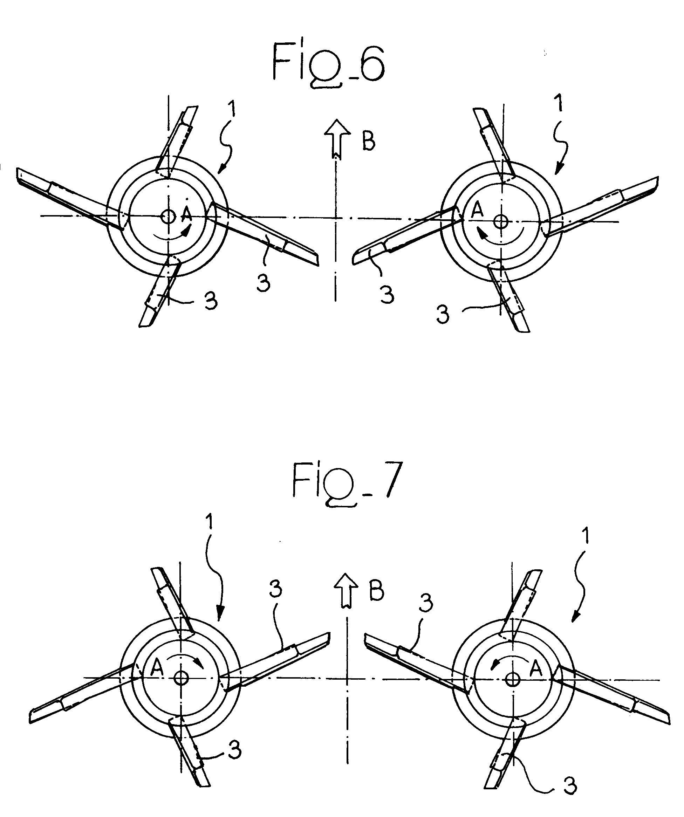

As it is clearly apparent from figures 2, 3, the bottom wall 4 of each blade has, at least throughout a portion of its longitudinal extension, two portions 4a, 4b arranged side by side and forming therebetween an angle B (figure 4) which is preferably between 1° and 4°.

In the case of the specific illustrated example, the splitting of the bottom wall 4 starts from a point 14a (figure 2) spaced apart from the radially inner end of the blade and continues up to the outer end. Furthermore, the portion 4a adjacent to the upper wing 6 ends before the other portion 4b.

Due to this feature, the product which is guided within portions 4a, 4b of bottom wall 4 of each spreading blade is projected outwardly according to different directions and speeds, so as to obtain the best possible spreading.

As apparent from the drawings, the shorter channel portion 4a is inclined in a direction opposite to the direction of rotation of the spreading disc. The tests which have been conducted have shown that in this way it is possible to obtain the best possible size and shape of the area covered by the spread product.

According to a further feature, the bottom wall of each blade also has a plurality of parallel ridges 8 (figure 2) preferably having a depth which increases radially outwardly to better canalise the product within each blade.

Naturally, while the principle of the invention remains the same, the details of construction and the embodiments may widely vary with respect to what has been described and shown purely by way of example, without departing from the scope of the present invention. For example, the number of blades provided on the disc may be different from four.

Furthermore, the invention is applicable to machines both of the type having a single spreading disc and of the type having two counter-rotating spreading discs, having vertical axes and a symmetrical configuration with respect to a vertical medium plane of the machine (figures 6, 7). In this case, the direction of rotation of the two discs may be inverted, by inverting the rotation of the power transmission, so as to obtain the desired spreading characteristics. By changing from one direction of rotation to the other, it is of course necessary to mount the two discs in inverted positions, as shown in figures 6, 7. In these figures, the direction of movement of the machine is indicated by arrow B.

## Claims

1. Spreading disc (1) for fertiliser spreading machines of centrifugal-type, comprising a supporting plate (2) and a plurality of spreading blades (3) fixed to the supporting plate (2) and each having a channel configuration, characterised in that the bottom wall (4) of each spreading blade (3) has, at least throughout a portion of its longitudinal extension, two longitudinal portions arranged side by side (4a, 4b), defining an angle (B) therebetween.

2. Spreading disc according to claim 1, characterised in that said portions of the bottom wall (4) of each spreading blade (3) which are inclined to each other (4a, 4b) have different lengths, the shorter portion being inclined in a direction opposite to the direction of rotation.

3. Spreading disc according to claim 2, characterised in that the splitting of the bottom wall (4) into said two inclined portions (4a, 4b) starts from a point of the blade (3) which is spaced from the radially inner end of the blade.

4. Spreading disc according to claim 3, characterised in that the bottom wall (4) has a plurality of longitudinal ridges having a depth increasing radially outwardly.

5. Spreading disc according to claim 1, characterised in that said angle (B) is between 1° and 4°.

6. Fertiliser spreading machine of centrifugal type, characterised in that it includes at least one spreading disc according to any of the preceding claims.
